# EUROPEAN PATENT APPLICATION

(11) **EP 2 317 128 A1**
(43) Date of publication of application: **04.05.2011**
(21) Application number: 10251789.3
(22) Date of filing: 13.10.2010
(51) Int. Cl.: F03D 3/00, F03D 11/02

(54) **Vertical axis wind turbine**

(30) Priority: 30.10.2009 HK 09110157
(71) Applicant: Hopewell Wind Power Limited, Tortola (VI)
(72) Inventor: WU, Gordon Ying Sheung, Hong Kong (HK); WU, Thomas Jefferson, Hong Kong (HK)
(74) Representative: Hardy, Rosemary

(57) **Abstract**

A vertical axis wind turbine 10 has a rotor 15 carrying at least one blade 23 and mounted to a support structure 16 for rotation about an upright rotor axis 29. A pin wheel 36 fixed to the rotor 15 is drivingly meshed with a toothed wheel 41 mounted to the support structure 16. A transmission 46, 6, 73, 74 is provided for transmitting torque from the toothed wheel 41 to an electric generator 43.

## Description

### Technical field

The current invention relates to vertical axis wind turbines.

### Background of the Invention

With the continuing increase in demand for energy, especially in developing countries, and a realisation that traditional fossil fuel supplies are limited, there is increasing interest in new and improved ways to harness renewable energy sources such as sunlight, wind, rain (water), tides and geothermal heat, which are naturally replenished. Hydro-electricity generation has been a mainstay of renewat le energy for many decades. However, with greater importance being placed on the environmental impact of damming waterways and the realisation that clean fresh drinking water is an important commodity, hydro-generation schemes are becoming less desirable. Attention has now turned to wind as a source of future large scale electricity generation.

Wind turbines can be characterised as either horizontal axis or vertical axis turbines. Horizontal axis turbines typically comprise a tower with a large fan-like blade rotating around a horizontal axis much like a windmill. Hitherto the largest horizontal axis wind turbines are about the height of a 40-storey building and have a blade diameter of approximately 126 metres. In order to produce sufficient electricity for supply to a public electricity network, horizontal axis wind turbines are located in large wind farms that can comprise hundreds of wind turbines spread over a large area. Although they use an abounded renewable energy source these wind farms occupy large areas of land and are unsightly.

A vertical axis wind turbine can accept wind from any direction and does not need to turn, or yaw, about its vertical axis, to face the prevailing wind direction. Large scale vertical axis wind turbines have been proposed having a large diameter stationary hollow core providing an upright support structure, and a rotor supported about the core on which lift-type aerofoils are provided for driving a generator through a gear transmission. The gear transmission may include a ring gear fixed to the rotor, the size of which is limited by the diameter of the core. While bearings and ring gears up to 5 metres in diameter can be relatively readily manufactured, for large scale machines having ring gears of the order of 20 to 50 metres or more in diameter, manufacturing these components is problematic. The special-purpose machinery needed to manufacture such massive components makes their cost very high, while the manufacturing tolerances that can be achieved have a significant influence on the efficiency of the transmission and, for instance, the proper engagement between components in the gear transmission. A ring gear or rotor of large diameter will have an associated radial runout-a deviation in a radial direction from a surface of revolution, caused by eccentricity and out-of-roundness. It will also have a corresponding axial runout - a deviation in an axial direction from a reference surface which occurs during a revolution of the rotor. If the runout is large it may subject the transmission components such as gears, couplings, shafts, and bearings to excessive loads and premature wear.

It is an object of the present invention to provide a large scale shaftless vertical axis wind turbine that can be manufactured more cost effectively. It is another object of the present invention to provide a vertical axis wind turbine that overcomes or at least ameliorates disadvantages with known wind turbines, or at least to provide the public with a useful alternative.

### Disclosure of the Invention

In one aspect there is provided a wind turbine including:
a support structure;
a rotor carrying at least one blade and mounted to the support structure for rotation about an upright rotor axis;
a pin wheel fixed to the rotor, the pin wheel having a plurality of circumferentially spaced pins, each pin having a respective pin axis;
a toothed wheel drivingly meshed with the pins and mounted to the support structure for rotation about a toothed wheel axis;
an electric generator, and
a transmission for transmitting torque from the toothed wheel to the electric generator.

Preferably the toothed wheel is mounted such that it can be displaced relative to the support structure while maintaining meshing engagement with the pin wheel so as to accommodate runout in the rotor.

Preferably the wind turbine further includes a plurality of rotor-supporting rollers to support the weight of the rotor, the rollers being mounted to the support structure and circumferentially spaced about the rotor.

In a primary variant of the invention the pin axes substantially intersect with the rotor axis and an engaging surface of each pin cooperates with the toothed wheel so that a degree of radial runout can be accommodated between the pin wheel ard toothed wheel.

Preferably the pin axes are aligned radially.

Optionally the wind turbine further includes a pivot for operatively connect ng the toothed wheel to the support structure such that the toothed wheel can be displaced relative to the support structure.

Preferably the pivot is arranged to pivot about a tangential pivot axis. The tangential pivot axis preferably lies in a plane common with the pin axes.

Optionally the wind turbine further includes a structural frame, the pivot connecting the frame to the support structure in a substantially rigid manner, wherein the generator is mounted to the frame to rotate about the pivot together with the toothed wheel. Preferably the transmission is also mounted to the frame.

Optionally the weight of the structural frame is at least partially supported by frame-supporting rollers resting upon an annular surface of the rotor.

The toothed wheel may be disposed substantially above or below the pin wheel.

Preferably the rotor-supporting rollers are mounted to the support structure upon flexible mounts for load sharing. Preferably each flexible mount includes ε hydraulic cylinder aligned axially, the hydraulic cylinders being in fluid communication with a common source.

Optionally the toothed wheel is mounted to move with at least one of the rotor-supporting rollers such that the toothed wheel can be displaced relative to the support structure.

Preferably the transmission includes flexible coupling means allowing transmission of torque from the toothed wheel to the electric generator throughout the range of displacement of the flexible mount. Optionally the flexible coupling means includes a telescopic splined coupling and at least one universal joint.

In a secondary variant, the pin axes are substantially parallel to the rotor axis and an engaging surface of each pin cooperates with the toothed wheel so that a degree of axial runout can be accommodated between the pin wheel and toothed wheel.

In an embodiment of the secondary variant the toothed wheel axis is substantially parallel to the rotor axis and is mounted such that the toothed wheel can be displaced radially relative to the support structure to accommodate axial runout in the pin wheel while maintaining meshing engagement with the pin wheel.

Preferably the turbine further includes a guide ring fixed to the rotor, each arcuate portion of the guide ring being concentric with an adjacent arcuate portion of the pin wheel, and wherein the a carriage engaged on the guide ring cooperates with the toothed wheel to accommodate axial runout in the pin wheel while maintaining meshing engagement with the pin wheel. Preferably the turbine further includes a structural frame to which the carriage is fixed in a substantially rigid manner, wherein the generator is mounted to the structural frame to move radially together with the toothed wheel.

In another aspect there is provided a wind turbine including:
a support structure;
a rotor carrying at least one blade and mounted to the support structure fo- rotation about an upright rotor axis;
an electric generator, and
a transmission for transmitting torque from the rotor to the electric generator, wherein the transmission includes pin gearing for connecting the rotor to the electric generator.

The pin gearing may be bevel pin gearing or parallel pin gearing.

Further aspects of the invention will become apparent from the following description, which is given by way of example only and is not intended to limit the scope of use or functionality of the invention.

### Brief Description of the Drawings

An exemplary form of the present invention will now be described by way of example only and with reference to the accompanying drawings, in which:
Figure 1 is a sectional elevation of a first exemplary embodiment of a wind turbine according to the invention.
Figure 2 is shows an enlarged view of detail A of Fig. 1:
Figure 3 is a plan of the turbine part of Figure 2;
Figure 4 is an enlarged view corresponding to detail A of Fig. 1 but for a second embodiment of a wind turbine.
Figure 5 is a plan of the turbine part of Figure 4;
Figure 6 is an enlarged view corresponding to detail A of Fig. 1 but for a third embodiment of a wind turbine,
Figure 7 is a plan of the turbine part of Figure 6;
Figure 8 is an end elevation of the meshing toothed wheel and pin wheel of the turbine of Figure 6;
Figure 9 is a cross sectional view through a pin of the pin wheel of the turbine of
Figures 2, 4, 6 and 10;

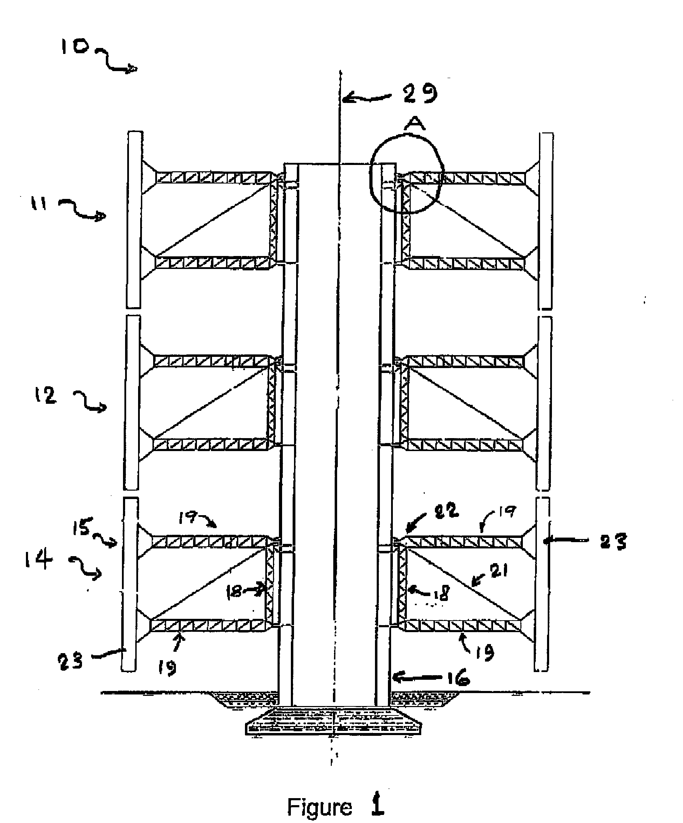

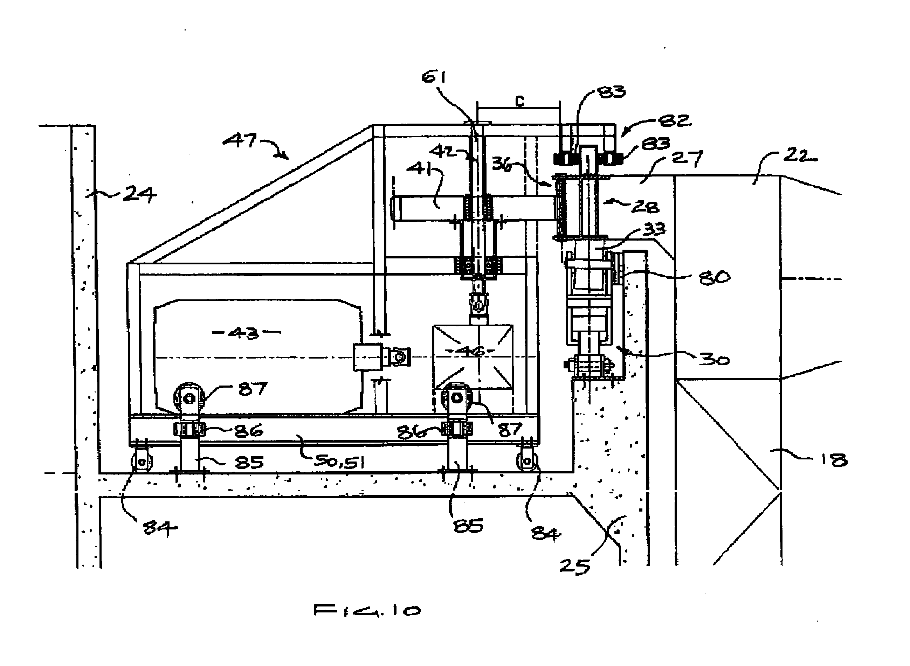

Figure 10 is an enlarged view corresponding to detail A of Fig. 1 but for a fourth embodiment of a wind turbine, and

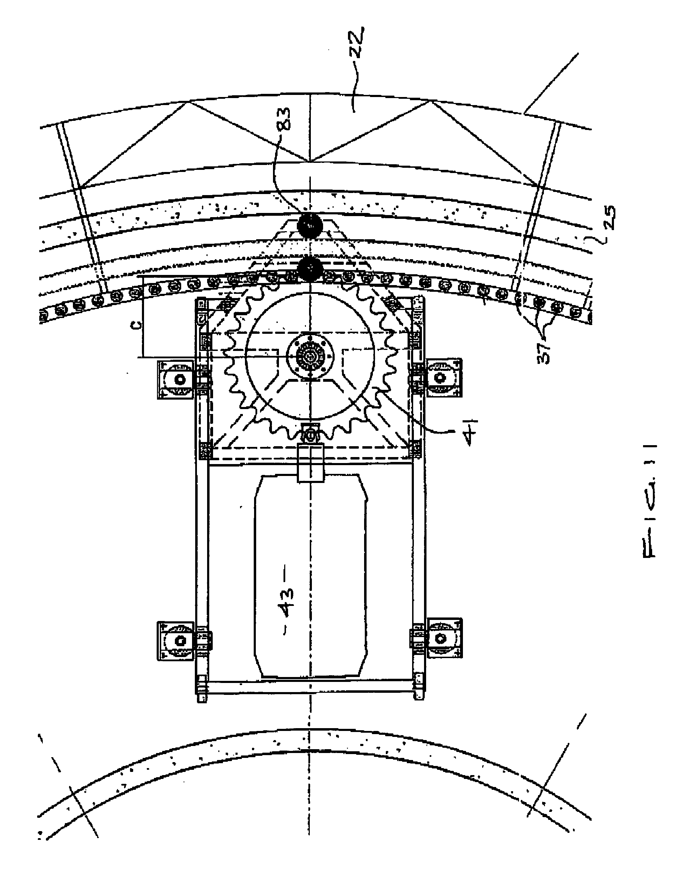

Figure 11 is a plan of the turbine part of Figure 10.

### Description of the Preferred Embodiments

Referring to Fig. 1, a wind turbine 10 include three like independent vertical axis wind turbines 11, 12 and14, each with a respective rotor 15 and electric generator (not shown in Fig. 1). The rotors 15 are stacked vertically about a common vertical cylindrical support structure 16 which defines an upright rotor axis 29. As the vertical wind turbine may extend to a height of several hundred metres it may experience different wind directions and velocities at different levels through its height Each rotor 15 is free to rotate about the rotor axis 29 in response to the wind that it experiences independently of the others.

As used herein, the term "axial" refers to a direction substantially parallel 10 the rotor axis 29. The term "radial" refers to a direction substantially orthogonal to the rotor axis 29. The term "circumferential" refers to the direction of a circular arc having a radius substantially orthogonal to the rotor axis 29.

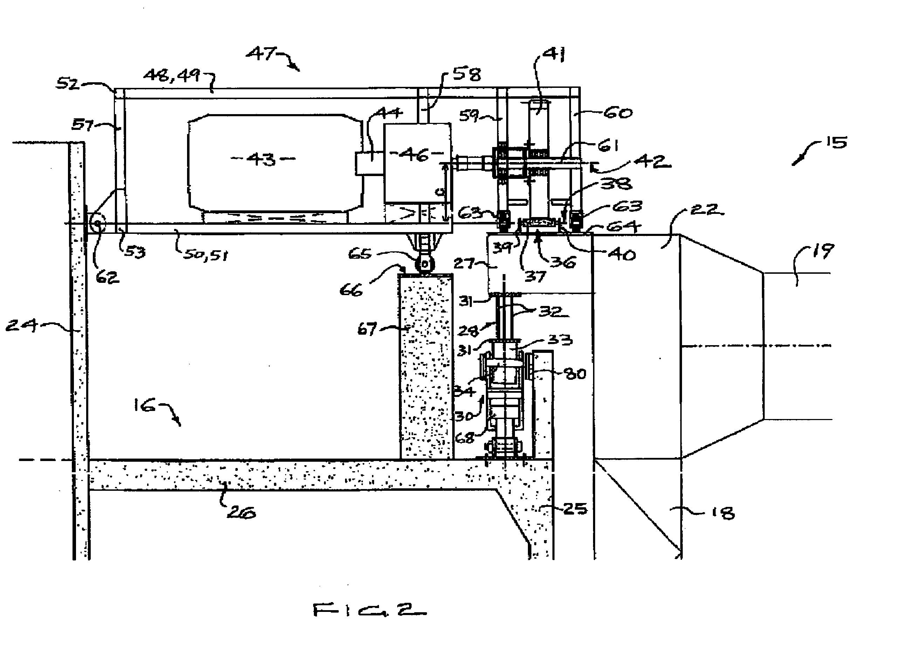

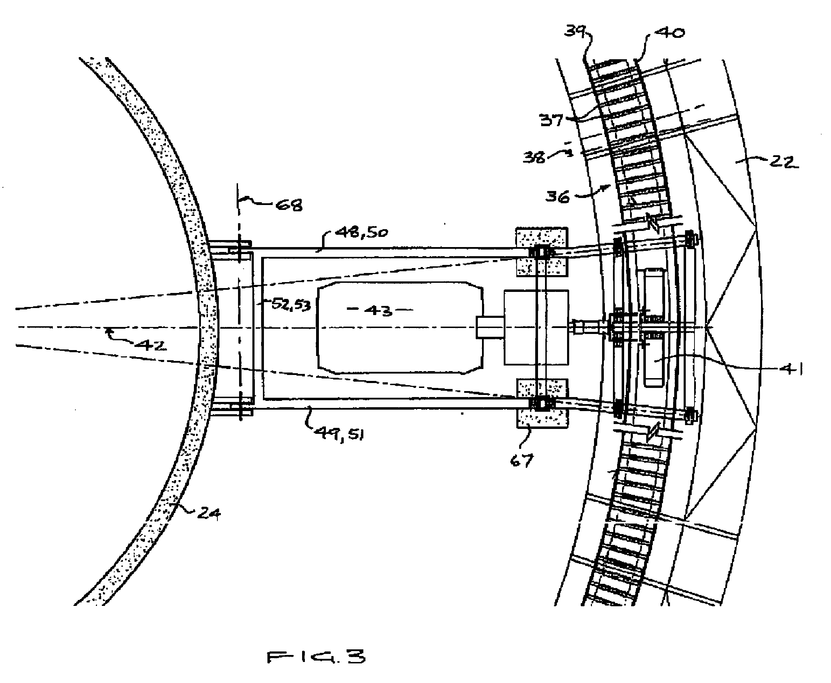

The vertical support structure 16 comprises a vertically extending core of the wind turbine 10 and typically has a diameter of between 15% and 40% of the maximum rotor diameter. Each of the wind turbines 11-14 includes a rotor 15 supported on and rotatable about the core support structure 16, as described in more detail below with reference to Figs. 2 and 3. The rotors 15 comprise a carousel assembly including ring truss 22 at the top of the rotor 15 that extends about the support structure 16. Each rotor 15 includes parallel upper and lower trussed arms 19 that project radially from the top and bottom of upright trusses 18. The radial truss arms 19 are stayed by diagonal tie members 21 extending from the top of the upright trusses 18 to the distal end of the radial truss arm 19. At its distal end each radial truss arm 19 caries an aerofoil shaped lift-type blade 23.

Referring to Figs. 2 and 3. the support structure 16 may be constructed of reinforced concrete and includes concentric inner and outer walls 24, 25 connected try a horizontal ledge 26 proximate the ring truss 22. A ring-shaped bearing beam 28 has planar annular flanges 31 joined by webs 32 to form a hollow section. The bearing beam 28 is concentric with the rotor axis 29 and the ring truss 22, and is fixed to the ring truss 22 by support arms 27, the bearing beam 28 and ring truss 22 thereby forming a part of the rotor 15. Supporting the weight of the rotor 15 are a plurality flexible mounts 30, which are circumferentially spaced around the ledge 26 below the bearing beam 28. Each flexible mount 30 includes a rotor-supporting roller 33 supported on a shaft 34 and held in engagement with the bottom flange 3', thereby allowing the rotor to turn. The rotor-supporting rollers 33 are tapered to allow rolling line contact to be maintained with the bearing beam 28 without slipping - the shaft 34 extending centrally through each roller 33. Each flexible mount 30 includes a hydraulic cylinder 68 aligned axially, parallel to the rotor axis 29, the hydraulic cylinders 68 being in fluid communication with a common pressure source (not shown) for load sharing between all of the mounts 30. A vertical guide 80 is provided at the inner side of the outer wall 25 adjacent the rotor-supporting rollers 33 for resisting lateral movement of the rollers 33 as the rollers move up and down axially.

Mounted to the top of the support arms 27 a pin wheel 36 is fixed to the rotor and concentric with rotor axis 29. The pin wheel 36 includes a plurality of circumferentially spaced pins 37, each pin 37 having a respective pin axis 38. A toothed wheel 41 is drivingly meshed with the pins 36 and mounted for rotation about a radially extending toothed wheel 41. An electric generator 43 with a ma n shaft 44 coaxial with the toothed wheel 41 is supplied with torque via a transmission 45 including a gearbox 46.

A first embodiment of the wind turbine is shown in Figs 2 and 3 wherein the radially extending pin axes 38 substantially intersect with the rotor axis 29 at a common point (not shown) the rotor axis 29 and toothed wheel axis 42 intersecting at right angles in the manner of bevel pin gearing. A substantially rigid frame 47 carries the toothed wheel 41 and includes mutually fixed elongate members, including upper and lower longitudinal horizontal members 48, 49, 50, 51, upper and lower transverse horizontal members 52-56, and upright members 57-60. The frame 47 supports the transmission 45 and generator 43, as well as the toothed wheel 41, to which it is mounted by a shaft 61 of the transmission 45. A pivot 62 connects the radially inner end of the frame 47 to the support structure 16, specifically to the inner well 24, while the radially outer end of the frame 47 is supported by frame-supporting rollers 63 upon a horizontal annular plate 64 fixed to the support arms 27. A portion of the weight of the structural frame 47 is also carried by rollers 65 resting upon a horizontal surface 66 on a plinth 67, which is in turn mounted upon the ledge 26. The pivot 62 is arranged to pivot about a tangential pivot axis 68 perpendicular to the radial toothed wheel axis 42, and which lies in the same radial plane as the pin axes 38, so that the toothed wheel 42 can be pivotably displaced relative to the support structure 16. The distance between the pivot 62 and the meshed toothed wheel 41 and pin wheel 36 is such that there is negligible relative rotation between these meshed components. By allowing free pivoting movement of the toothed wheel 41 in this manner any axial runout of the rotor 15, does not affect the relative axial positions of the meshing toothed wheel 41 and pin wheel 36, which can thereby satisfactority be maintained in meshing engagement throughout their rotation.

The pins 37 are elongate and circular in cross-section being supported at their opposing ends by inner and outer annular flanges 39, 40. In the embodiment illustrated the toothed wheel 41 may have a parallel gear form and is disposed above the pin wheel 36. In this manner the cylindrical outer engaging surface of each pin 37 cooperates with the toothed wheel 41 so that a degree of radial runout can be accommodated between the pin wheel and toothed wheel.

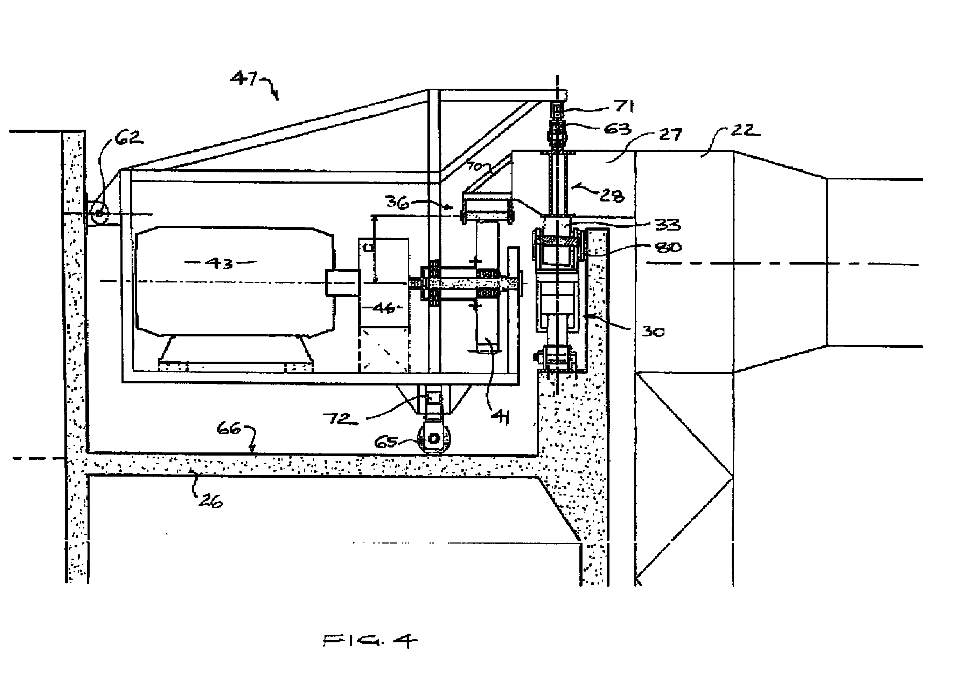

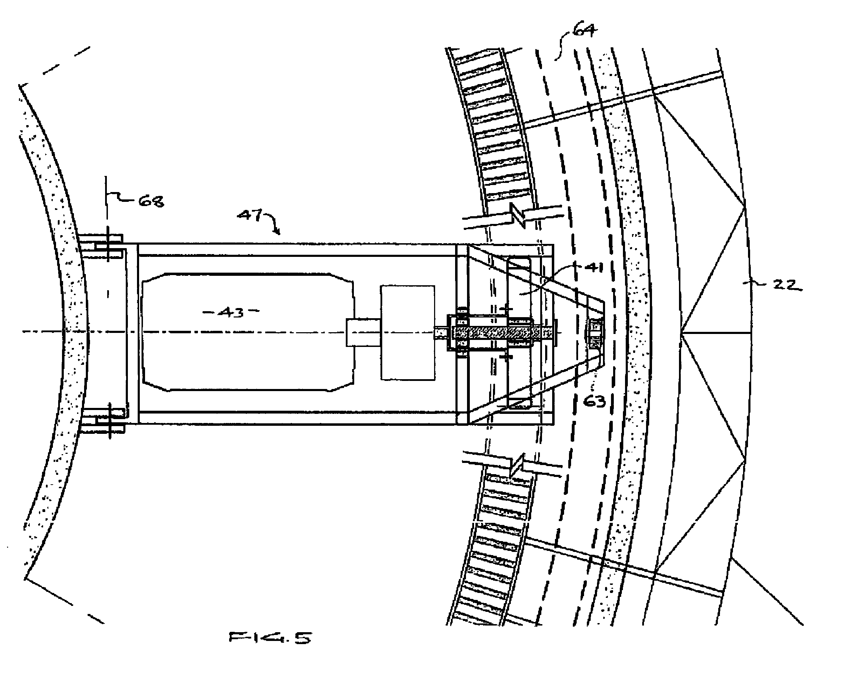

In a second embodiment of the wind turbine shown in Figs. 4 and 5, like the first embodiment, the radially extending pin axes 38 substantially intersect with the rotor axis 29 at a common point (not shown). This second embodiment differs from the first embodiment primarily in respect of the relative positions of the toothed wheel 41 and pin wheel 36 - in this embodiment the toothed wheel 41 is disposed below the pin wheel 36, the toothed wheel 41 being mounted to a downward-facing surface of the rotor 15 formed by triangular truss members 70 fixed to the inner ends of the support arms 27. Compared to the first embodiment, positioning the toothed wheel 41 below the pin wheel 36 prevents the frame 47 from pivoting upwardly independently of the rotor 15. In this second embodiment the a hydraulic cylinder 71 is aligned axially, parallel to the rotor axis 29, and connected between the frame 47 and the frame-supporting roller 63. Likewise a hydraulic cylinder 71 is aligned axially, and connected between the frame 47 and the frame-supporting rollers 65 which roll directly upon the ledge 26.

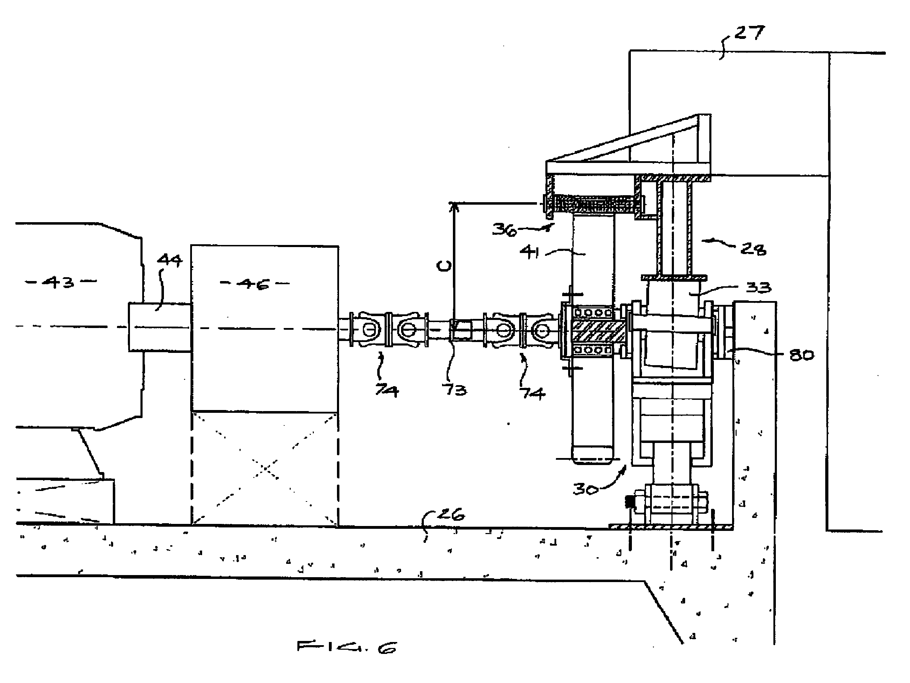

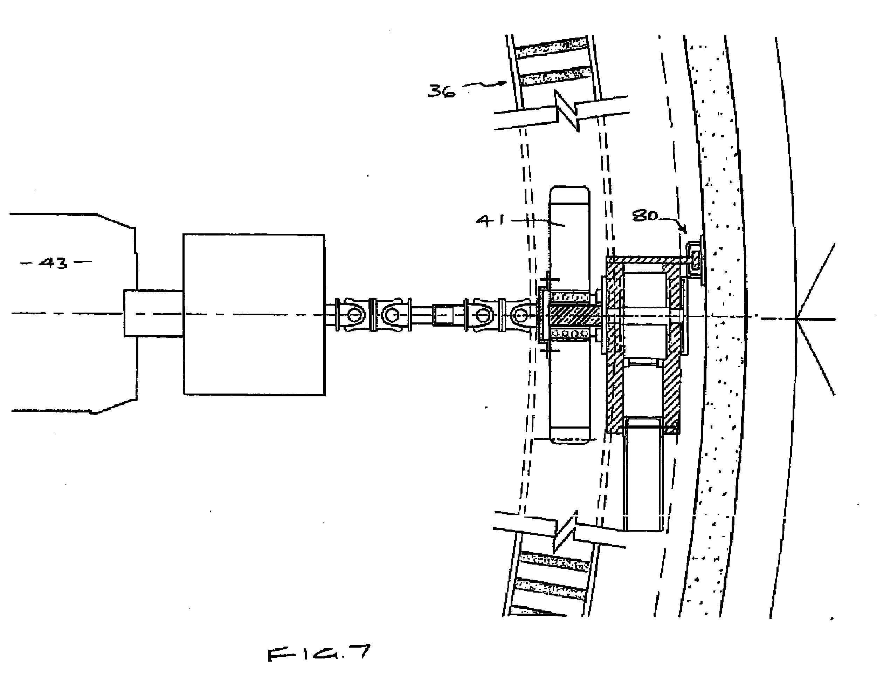

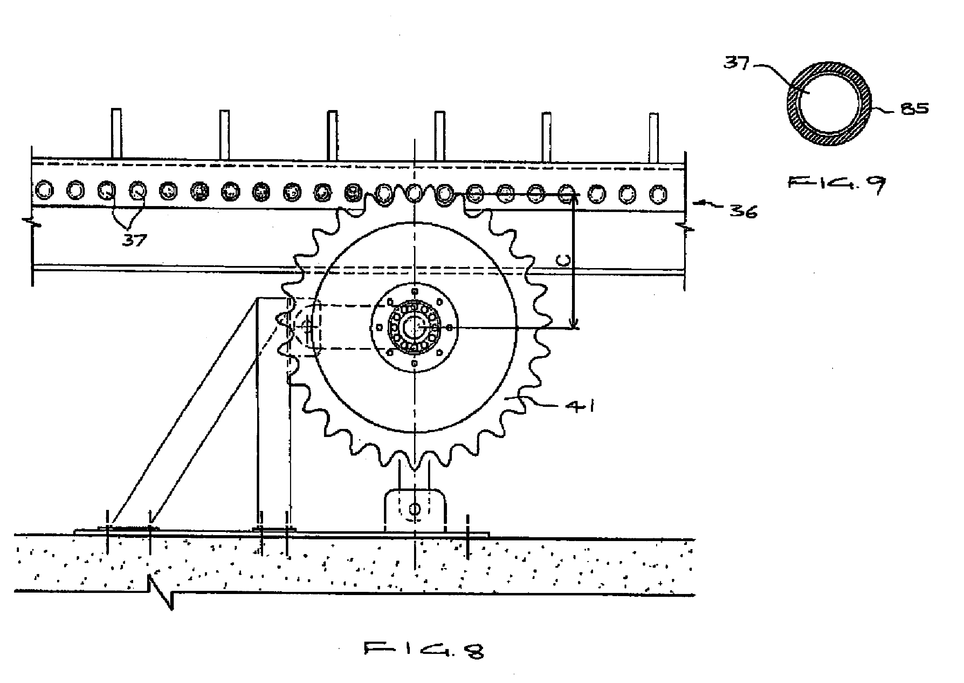

In a third embodiment of the wind turbine shown in Figs. 6 to 9, like the first embodiment, the radially extending pin axes 38 substantially intersect with the rotor axis 29 at a common point (not shown). In this third embodiment the toothed wheel 42 is also able to be displaced axially relative to the support structure 16 to maintain proper meshing engagement with the pin wheel 36 and thereby accommodate axial runout. Here this is done by fixing the toothed wheel 41 to move with one of the rotor-supporting rollers 33. In this embodiment the electric generator 43 and gearbox 46 are mounted directly to the support structure 16 without an intervening moving frame for supporting the toothed wheel 41 and the transmission includes flexible coupling means. The flexible coupling means includes, between the toothed wheel and the gearbox, a telescopic splined coupling 73 connected between a pair of universal joints 74. The load-sharing flexible mount 30 maintains the rotor-supporting rollers 33 in contact with the rail beam 28 and the attached toothed wheel 41 is thereby maintained in proper mesh with the pin wheel 36 despite any axial runout in the rotor 15. The pins 37 may be fitted with rotatable rollers 85 to minimise wear due to sliding.

A fourth embodiment is shown in Figs. 10 and 11, comprising a secondary variant differing from that of the first through third embodiments, in that the pin axes 38 are substantially parallel to the rotor axis 29, in the manner of parallel pin gearing wherein the toothed wheel axis 42 is also parallel to the rotor axis 29. In this embodiment the axial runout is accommodated by the relative axial sliding movement which is possible between the cylindrical engaging surface of each pin and the toothed wheel 41 with which it is meshed. A guide ring 76 accurately follows the curvature of the pin wheel 36. each arcuate portion of the guide ring 76 being concentric with an adjacent arcuate portion of the pin wheel. A carriage 82 has rollers 83 engaged on laterally opposing sides of the guide ring 76 and cooperates with the toothed wheel 41 to accommodate radial runout in the pin wheel 36 while maintaining meshing engagement with the pin wheel. The frame 47 on which the toothed wheel 41 is carried is rigidly connected to the carriage 82 and is free to move radially to compensate for radial runout. As in the first and second embodiments, the frame 47 supports the transmission 45 and generator 43, as well as the toothed wheel 41, to which it is mounted. The frame 47 is supported to move radially upon the ledge 26 by wheels 84. A pair of stanchions 85 is mounted on each side of the frame 47, each carrying a guide roller 86 engaging the parallel members 50, 51 to guide the frame's movement linearly. Hold down rollers 87 engage the planar top of the members 50, 51 to restrain the frame 47 from over turning.

Where in the foregoing description reference has been made to integers or elements having known equivalents then such are included as if individually set fourth herein. Embodiments of the invention have been described, however it is understood that variations, improvements or modifications can take place without departure from the spirit of the invention or scope of the appended claims.

## Claims

1. A wind turbine including:
a support structure;
a rotor carrying at least one blade and mounted to the support structure for rotation about an upright rotor axis;
a pin wheel fixed to the rotor, the pin wheel having a plurality of circumferentially spaced pins, each pin having a respective pin axis;
a toothed wheel drivingly meshed with the pins and mounted to the support structure for rotation about a toothed wheel axis;
an electric generator, and
a transmission for transmitting torque from the toothed wheel to the electric generator.

2. The wind turbine of claim 1 wherein the toothed wheel is mounted such that it can be displaced relative to the support structure while maintaining meshing engagement with the pin wheel so as to accommodate runout in the rotor.

3. The wind turbine of claim 1 or claim 2 further including a plurality of rotor-supporting rollers to support the weight of the rotor, the rollers being mounted to the support structure and circumferentially spaced about the rotor.

4. The wind turbine of any one of the preceding claims wherein the pin axes substantially intersect with the rotor axis and an engaging surface of each pin cooperates with the toothed wheel so that a degree of radial runout can be accommodated between the pin wheel and toothed wheel.

5. The wind turbine of claims 4 wherein the pin axes are aligned radially.

6. The wind turbine of any one of the preceding claims wherein the wind turbine further includes a pivot for operatively connecting the toothed wheel to the support structure such that the toothed wheel can be displaced relative to the support structure.

7. The wind turbine of claim 6 wherein the pivot is arranged to pivot about a tangential pivot axis.

8. The wind turbine of claim 7 wherein the tangential pivot axis lies ir a plane common with the pin axes.

9. The wind turbine of claims 8 or claim 8 further including a structural frame, the pivot connecting the frame to the support structure in a substantially rigid manner, wherein the generator is mounted to the frame to rotate about the pivot together with the toothed wheel.

10. The wind turbine of claim 9 wherein the weight of the structural frame is at least partially supported by frame-supporting rollers resting upon an annuar surface of the rotor.

11. The wind turbine of claim 10 wherein the transmission is also mounted to the frame.

12. The wind turbine of any one of the preceding claims wherein the toothed wheel is disposed substantially above or below the pin wheel.

13. The wind turbine of any one of the preceding claims wherein the rotor-supporting rollers are mounted to the support structure upon flexible mounts for load sharing.

14. The wind turbines of claim 13 wherein each flexible mount includes a hydraulic cylinder aligned axially, the hydraulic cylinders being in fluid communication with a common source.

15. The wind turbine of any one of claims 3 to 14 wherein the toothed wheel is mounted to move with at least one of the rotor-supporting rollers such that the toothed wheel can be displaced relative to the support structure.

16. The wind turbine of any one of claims 13 to 15 wherein the transmission includes flexible coupling means allowing transmission of torque from the toothed wheel to the electric generator throughout the range of displacement of the flexible mount.

17. The wind turbine of claim 16 wherein the flexible coupling means includes a telescopic splined coupling and at least one universal joint.

18. The wind turbine of any one of the preceding claims wherein the p n axes are substantially parallel to the rotor axis and an engaging surface of each pin cooperates with the toothed wheel so that a degree of axial runout can be accommodated between the pin wheel and toothed wheel.

19. The wind turbine of any one of claims 1-3 wherein the toothed wheel axis is substantially parallel to the rotor axis and is mounted such that the toothed wheel can be displaced radially relative to the support structure to accommodate axial runout in the pin wheel while maintaining meshing engagement with the pin wheel.

20. The wind turbine of claim 19 wherein the turbine further includes a guide ring fixed to the rotor, each arcuate portion of the guide ring being concentric with an adjacent arcuate portion of the pin wheel, and wherein the a carriage engaged on the guide ring cooperates with the toothed wheel to accommodate axial runout in the pin wheel while maintaining meshing engagement with the pin wheel.

21. The wind turbine of claim 20 further including a structural frame to which the carriage is fixed in a substantially rigid manner, wherein the generator is mounted to the structural frame to move radially together with the toothed wheel.

22. A wind turbine including:
a support structure;
a rotor carrying at least one blade and mounted to the support structure for rotation about an upright rotor axis;
an electric generator, and
a transmission for transmitting torque from the rotor to the electric generator, wherein
the transmission includes pin gearing for connecting the rotor to the electric generator.

23. The wind turbine of claim 22 wherein the pin gearing may be bevel pin gearing or parallel pin gearing.
